# EUROPÄISCHE PATENTSCHRIFT

(11) **EP 0 612 919 B1**
(45) Veröffentlichungstag und Bekanntmachung des Hinweises auf die Patenterteilung: **04.09.1996**
(21) Anmeldenummer: 93117653.1
(22) Anmeldetag: 30.10.1993
(51) Int. Cl.: F02M 37/22, F02M 37/10

(54) **Einrichtung für die Kraftstoffversorgung eines Kraftfahrzeugmotors**
Device for the fuel supply of a vehicle engine
Dispositif pour l'alimentation de carburant d'un moteur véhicule automobile

(30) Priorität: 26.02.1993 DE 4305985
(43) Veröffentlichungstag der Anmeldung: 31.08.1994
(73) Patentinhaber: Technoflow Tube-Systems GmbH, D-34277 Fuldabrück (DE)
(72) Erfinder: Brunnhofer, Erwin, D-34302 Guxhagen (DE)
(74) Vertreter: Andrejewski, Walter, Dr.

(56) Entgegenhaltungen:
- EP-A- 0 491 522
- EP-A- 0 579 540

## Beschreibung

Die Erfindung betrifft eine Einrichtung für die Kraftstoffversorgung eines Kraftfahrzeugmotors, - mit einem Kraftstoffilter, der ein Kraftstoffiltergehäuse aus Kunststoff und eine auswechselbare Filterpatrone aufweist, einem Kraftstoffsystem mit Kraftstoffpumpe, Kraftstofftank und Kraftstoffleitungen für die Kraftstoffzuführung zu dem Verbrennungsmotor des Kraftfahrzeuges und einem Luftsystem mit Verbrennungsluftfilter und Verbrennungsluftleitungen für die Verbrennungsluftzuführung zu dem Verbrennungsmotor des Kraftfahrzeuges, wobei das Kraftstoffiltergehäuse sowie die Filterpatrone von dem Kraftstoff durchströmt sind und das Kraftstoffiltergehäuse bei eingeschalteter Kraftstoffpumpe unter Überdruck steht, und wobei der Kraftstoffilter zum Zwecke des Auffangens von kontrolliert austretendem Kraftstoff in einem zum Kraftstoffsystem oder zum Luftsystem gehörenden Bauteil untergebracht ist. - Ist das Kraftfahrzeug mit einer Tankentlüftung ausgestattet, so umfaßt der Ausdruck Luftsystem auch die Bauteile der Tankentlüftung. System steht für das nach Maßgabe der Konstruktion des Kraftfahrzeuges geordnete Ganze der entsprechenden Bauteile.

Bei den aus der Praxis bekannten Einrichtungen des beschriebenen Aufbaues und der beschriebenen Zweckbestimmung ist der Kraftstoffilter ein besonderes, baulich selbständiges Aggregat, welches als solches in die Vorlaufleitung des Kraftstoffsystems eingesetzt ist. Der Kraftstoffilter besitzt ein Gehäuse mit einem Deckel, der zum Austausch der Filterpatrone abnehmbar ist. Aus Umfeld- und Umweltschutzgründen muß ein solcher Kraftstoffilter in hohem Maße leckagesicher und auch diffusionsfest in bezug auf den Kraftstoff ausgeführt sein, und zwar mit einer Leckrate bzw. einer Diffusionsrate von praktisch Null. Die bekannten Einrichtungen sind in fertigungstechnischer und in montagetechnischer Hinsicht aufwendig. Sie benötigen im übrigen besonderen Einbauraum und sind folglich im Kraftfahrzeug nicht leicht unterzubringen. Im eingebauten Zustand sind sie oft schwer zugänglich. Ihre Leckagesicherheit, häufig auch die Diffusionsfestigkeit, nehmen im Laufe der Zeit ab und genügen insoweit nicht den modernen Wünschen und Anforderungen.

Bei einer Einrichtung der eingangs beschriebenen Gattung (JP-A-3 105 055) ist der Kraftstoffilter im Kraftstofftank untergebracht, wobei die vom Kraftstoffilter ausgehende Kraftstoffleitung durch einen abnehmbaren Deckel des Kraftstofftanks geführt ist. Das ist fertigungstechnisch und insbesondere auch montagetechnisch aufwendig, weil der Kraftstoffilter nicht unmittelbar zugänglich ist.

Der Erfindung liegt die Aufgabe zugrunde, eine Einrichtung des vorstehend beschriebenen Aufbaues und der vorstehend beschriebenen Zweckbestimmung zu schaffen, die sich durch fertigungstechnische und montagetechnische Einfachheit auszeichnet und in bezug auf die Leckagesicherheit bzw. die Diffusionssicherheit bei geringem Aufwand allen Anforderungen und insbesondere im Hinblick auf den Umweltschutz langfristig genügt. Nach bevorzugter Ausführungsform der Erfindung soll die erfindungsgemäße Einrichtung darüber hinaus leicht in einem Kraftfahrzeug untergebracht und die Filterpatronen leicht ausgewechselt werden können.

Zur Lösung dieser Aufgabe lehrt die Erfindung, ausgehend von der eingangs beschriebenen Einrichtung die Kombination der folgenden Merkmale zu verwirklichen:
a) zwischen Deckel und Kraftstoffiltergehäuse befindet sich ein Abstandsspalt, der eine Leckagesicherung aufweist,
b) die Leckagesicherung ist dadurch bewirkt, daß der Abstandsspalt mit dem Kraftstoffsystem oder dem Luftsystem leckagesichernd in Verbindung steht.

Nach bevorzugter Ausführungsform der Erfindung ist in diesem Zusammenhang der Deckel des Kraftstoffiltergehäuses als Einsetzdeckel mit Einsetzkragen und Deckelflansch ausgeführt, welcher Deckelflansch auf einen Auflagebund am Kraftstoffiltergehäuse aufgelegt ist, wobei der Abstandsspalt zwischen dem Deckelkragen und dem gegenüberliegenden Kraftstoffiltergehäuse sowie zwischen dem Deckelflansch und dem Auflageflansch ausgebildet ist und wobei dieser Abstands spalt über zumindest eine Bohrung mit dem Kraftstoffsystem oder dem Luftsystem in Verbindung steht. Es versteht sich, daß der Deckel am Kraftstoffiltergehäuse befestigt sein muß. Das kann einfach dadurch geschehen, daß der Einsatzdeckel durch eine Überwurfringmutter am Kraftstoffiltergehäuse gehalten ist. Bei der erfindungsgemäßen Einrichtung ist es nicht unbedingt erforderlich, mit Dichtungsringen zu arbeiten. Im Rahmen der Erfindung liegt es jedoch, in dem Abstandsspalt zusätzlich zumindest einen Dichtungsring anzuordnen, der in eine Dichtungsringaufnahme am Einsatzdeckel eingelegt ist.

Bei einer Ausführungsform ist der Kraftstoffilter in dem Kraftstofftank des Kraftstoff systems mit außenliegendem Deckel angeordnet und steht der Abstandsspalt mit dem Innenraum des Kraftstofftanks leckagesichernd in Verbindung. Es besteht aber auch die Möglichkeit, den Kraftstoffilter in dem Aktivkohlefilter einer zum Luftsystem gehörenden Tankentlüftung mit außenliegendem Deckel anzuordnen und den Abstandsspalt mit einem Sammelraum für die Kraftstoffdämpfe leckagesichernd in Verbindung zu bringen, von welchem Sammelraum aus eine Ansaugleitung zum Motor des Kraftfahrzeuges führt. Bei einer weiteren Ausführungsform ist der Kraftstoffilter in dem Verbrennungsluftfilter des Luftsystems mit außenliegendem Deckel angeordnet und steht der Abstandsspalt mit einem Sammelraum in Strömungsrichtung der Verbrennungsluft hinter dem Filterkörper des Verbrennungsluftfilters leckagesichernd in Verbindung. Regelmäßig weist der Kraftstoffilter einen in einer Außenwand des zum Kraftstoffsystem oder Luftsystem gehörenden Bauteils angeordneten Deckel auf und ist über die Deckelöffnung die Filterpatrone austauschbar. Hier sind besondere Maßnahmen bezüglich der Deckelabdichtung nicht erforderlich.

In baulicher Hinsicht bestehen bezüglich der Gestaltung des Kraftstoffilters erfindungsgemäß verschiedene Möglichkeiten. Da es sich um einen Massenartikel handelt, empfiehlt die Erfindung, daß der Kraftstoffilter als Modulbauteil ausgeführt ist und ein aus thermoplastischem Kunststoff gespritztes Kraftstoffiltergehäuse mit angespritzten Einbaubauteilen sowie einen aus thermoplastischem Kunststoff gespritzten Deckel aufweist. Das Kraftstoffiltergehäuse und der Deckel können diffusionsdicht ausgeführt sein, beispielsweise durch mehrschichtigen Aufbau aus entsprechenden thermoplastischen Kunststoffen. Bei dem Kraftstoffiltergehäuse aus Kunststoff können aber auch erhebliche Diffusionsraten zugelassen werden.

Die Erfindung geht von der Erkenntnis aus, daß bei einem Kraftfahrzeug der Kraftstoffilter im Hinblick auf die Leckagesicherheit und/oder die Diffusionsfestigkeit wesentlich vereinfacht werden kann, wenn eine höhere Leckrate oder eine geringere Diffusionsfestigkeit zugelassen und gleichsam ein Auffangen oder Absaugen des austretenden Kraftstoffes sichergestellt wird. Das Absaugen oder Auffangen wird erfindungsgemäß stets so verwirklicht, daß der abgesaugte oder aufgefangene Kraftstoff nicht freikommt, sondern im Kraftstoffsystem oder im Luftsystem bleibt und dem Kraftfahrzeugmotor und damit der Verbrennung zugeführt wird. Folglich sind stets alle Umweltschutzvorschriften erfüllt. Darüber hinaus kann bei der erfindungsgemäßen Einrichtung der Kraftstoffilter leicht im Kraftfahrzeug untergebracht werden, nämlich in ohnehin vorhandene Baugruppen des Kraftstoffsystems und/oder des Luftsystems integriert werden.

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch eine erfindungsgemäße Einrichtung, die in dem Kraftstofftank des Kraftstoffsystems eines Kraftfahrzeuges angeordnet ist,
- Fig. 2: einen Vertikalschnitt durch eine erfindungsgemäße Einrichtung, die in dem Aktivkohlefilter einer zum Luftsystem gehörenden Tankentlüftung angeordnet ist,
- Fig. 3: eine erfindungsgemäße Einrichtung, die in dem Verbrennungsluftfilter des Luftsystems eines Kraftfahrzeuges angeordnet ist, und
- Fig. 4: im gegenüber der Fig. 3 vergrößerten Maßstab einen Schnitt in Richtung A-A durch den Gegenstand nach Fig. 3.

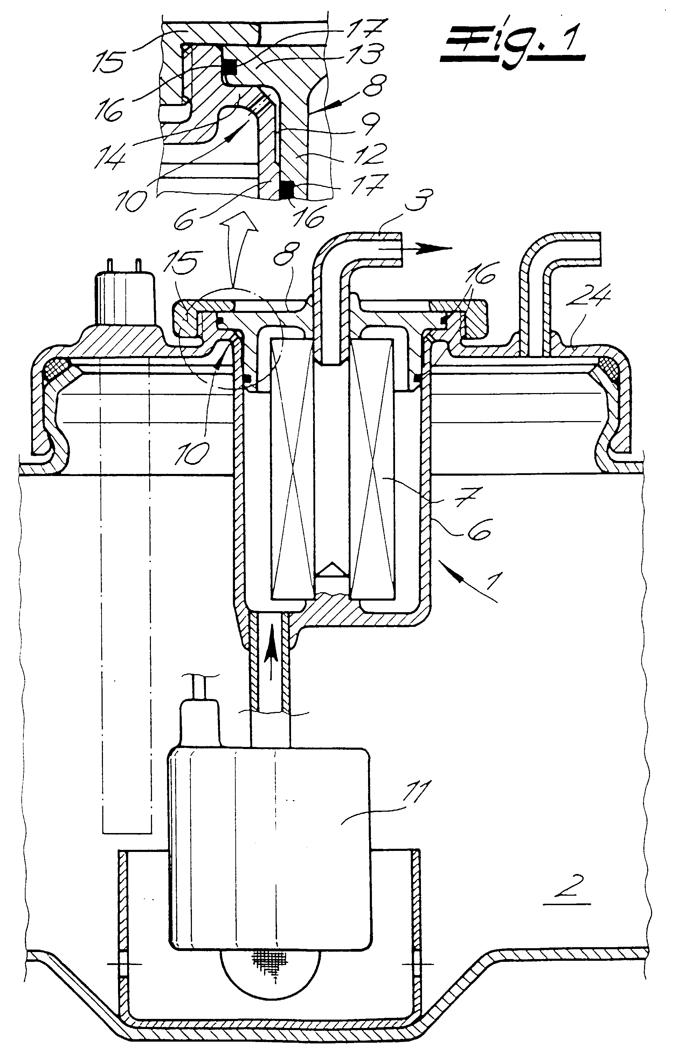

Die Figuren zeigen Einrichtungen für die Kraftstoffversorgung eines Kraftfahrzeuges. Zum grundsätzlichen Aufbau gehören ein Kraftstoffilter 1, ein Kraftstoffsystem mit Kraftstofftank 2 und Kraftstoffleitungen 3 für die Kraftstoffzuführung zu dem nicht gezeichneten Verbrennungsmotor des Kraftfahrzeuges und ein Luftsystem mit Verbrennungsluftfilter 4 und Verbrennungsluftleitungen 5 für die Verbrennungsluftzuführung zu dem Verbrennungsmotor des Kraftfahrzeuges. Bei den Ausführungsformen nach den Fig. 1 bis 4 sind stets die folgenden Maßnahmen verwirklicht:

Der Kraftstoffilter 1 weist ein Kraftstoffiltergehäuse 6, zumindest eine darin auswechselbar eingesetzte Filterpatrone 7 und einen zum Auswechseln der Filterpatrone 7 abnehmbaren Deckel 8 auf. Zwischen Deckel 8 und Kraftstoffiltergehäuse 6 befindet sich ein Abstandsspalt 9, der eine Leckagesicherung 10 aufweist. Die Leckagesicherung 10 ist dadurch bewirkt, daß der Abstandsspalt 9 mit dem Kraftstoffsystem und/oder dem Luftsystem leckagesichernd in Verbindung steht. Das Kraftstoffiltergehäuse 6 sowie die Filterpatrone 7 sind von dem Kraftstoff durchströmt und das Kraftstoffiltergehäuse 6 steht bei eingeschalteter Kraftstoffpumpe 11 unter Überdruck.

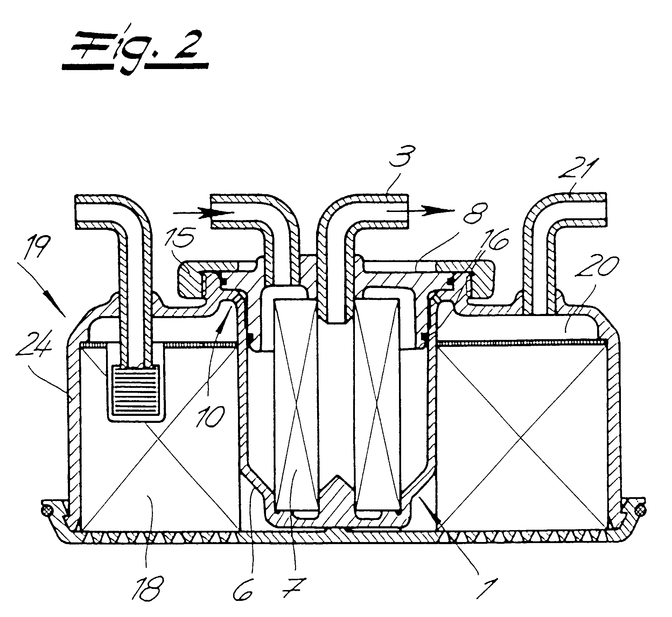

Im Ausführungsbeispiel und nach bevorzugter Ausführungsform der Erfindung ist der Deckel 8 des Kraftstoffiltergehäuses 6 als Einsetzdeckel mit Deckelkragen 12 und Deckelflansch 13 ausgeführt, welcher Deckelflansch 13 auf einen Auflagebund 14 am Kraftstoffiltergehäuse 6 aufgelegt ist. Der Abstandsspalt 9 ist zwischen dem Deckelkragen 12 und dem gegenüberliegenden Kraftstoffiltergehäuse 6 sowie zwischen dem Deckelflansch 13 und dem Auflagebund 14 ausgebildet, wobei dieser Abstandsspalt 9 über zumindest eine Bohrung 10 mit dem Kraftstoffsystem oder dem Luftsystem verbunden ist. Der Deckel 8 ist durch eine Überwurfringmutter 15 am Kraftstoffiltergehäuse 6 gehalten. In den Abstandsspalt 9 sind im Ausführungsbeispiel zusätzlich zwei Dichtungsringe 16 angeordnet, die in einer Dichtungsringaufnahme 17 am Deckel 8 eingelegt sind. Es würde auch der in den Fig. 1 und 2 obere Dichtungsring 16 genügen, - und Dichtungsringe könnten auch vollständig fehlen.

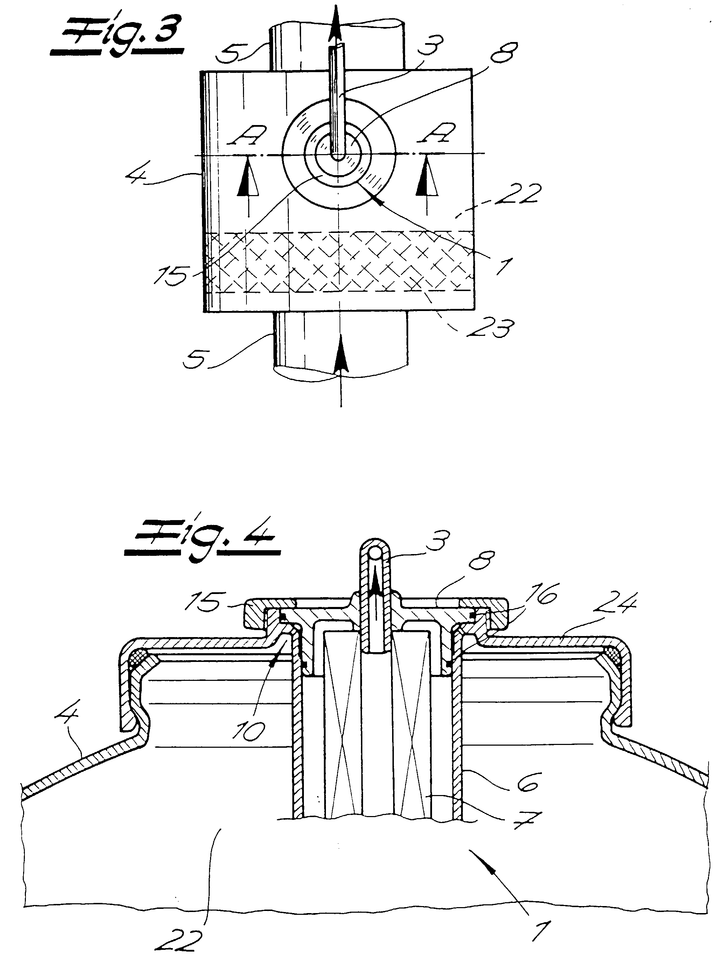

Bei der Ausführungsform nach Fig. 1 ist der Kraftstoffilter 1 in dem Kraftstofftank 2 des Kraftstoffsystems mit außenliegendem Deckel 8 angeordnet und der Abstandsspalt 9 ist mit dem Innenraum des Kraftstofftanks 2 leckagesichernd verbunden. Bei der Ausführungsform nach Fig. 2 ist der Kraftstoffilter 1 in dem Aktivkohlefilter 18 einer zum Luftsystem gehörenden Tankentlüftung 19 mit außenliegendem Deckel 8 angeordnet und der Abstandsspalt 9 steht mit einem Sammelraum 20 für die Kraftstoffdämpfe leckagesichernd in Verbindung, von welchem Sammelraum 20 eine Ansaugleitung 21 zum Verbrennungsmotor des Kraftfahrzeuges führt. Bei der Ausführungsform nach den Fig. 3 und 4 befindet sich der Kraftstoffilter 1 in dem Verbrennungsluftfilter 4 des Luftsystems mit außenliegendem Deckel. Der Abstandsspalt 9 steht hier mit einem Sammelraum 22 in Strömungsrichtung der Verbrennungsluft hinter dem Filterkörper 23 des Verbrennungsluftfilters 4 leckagesichernd in Verbindung. - Es versteht sich, daß die in den Fig. 1 bis 4 dargestellten Kraftstoffilter 1 und das umgebende Kraftstoffiltergehäuse 6 im Grundsatz zylindrisch ausgeführt sind. Dabei erkennt man bei einer vergleichenden Betrachtung der Fig. 1 bis 3 die Modulbauweise. Die Kraftstoffiltergehäuse 6 mögen aus thermoplastischem Kunststoff gespritzt sein und besitzen angespritzte Einbaubauteile 24. Auch der Deckel 8 ist aus thermoplastischem Kunststoff gespritzt.

Die beschriebene Einrichtung entspricht im Detail den Patentansprüchen 1 bis 8, wobei stets das erfindungsgemäße Grundprinzip verwirklicht ist, nämlich daß der Kraftstoffilter zum Zwecke des Auffangens von unkontrolliert austretendem Kraftstoff in einem zum Kraftstoffsystem oder Luftsystem gehörenden Gehäuse untergebracht ist.

## Patentansprüche

1. Einrichtung für die Kraftstoffversorgung eines Kraftfahrzeugmotors, - mit
einem Kraftstoffilter (1), der ein Kraftstoffiltergehäuse (6) aus Kunststoff und zumindest eine darin auswechselbar angeordnete Filterpatrone (7) und einen zum Auswechseln der Filterpatrone (7) abnehmbaren, außenliegenden Deckel (8) aufweist,
einem Kraftstoffsystem mit Kraftstoffpumpe (11), Kraftstofftank (2) und Kraftstoffleitungen (3) für die Kraftstoffzuführung zu dem Verbrennungsmotor des Kraftfahrzeuges und
einem Luftsystem mit Verbrennungsluftfilter (4) und Verbrennungsluftleitungen (5) für die Verbrennungsluftzuführung zu dem Verbrennungsmotor des Kraftfahrzeuges,
wobei das Kraftstoffiltergehäuse (6) sowie die Filterpatrone (7) von dem Kraftstoff durchströmt sind und das Kraftstoffiltergehäuse (6) bei eingeschalteter Kraftstoffpumpe (11) unter Überdruck steht, und wobei der Kraftstoffilter (1) zum Zwecke des Auffangens von unkontrolliert austretendem Kraftstoff in einem zum Kraftstoffsystem oder zum Luftsystem gehörenden Bauteil untergebracht ist, **dadurch gekennzeichnet**, daß die Kombination der folgenden Merkmale verwirklicht ist:
a) zwischen Deckel (8) und Kraftstoffiltergehäuse (6) befindet sich ein Abstandsspalt (9), der eine Leckagesicherung aufweist,
b) die Leckagesicherung ist dadurch bewirkt, daß der Abstandsspalt (9) mit dem Kraftstoffsystem oder dem Luftsystem leckagesichernd in Verbindung steht.

2. Einrichtung nach Anspruch 1, dadurch gekennzeichnet, daß der Deckel (8) des Kraftstoffiltergehäuses (6) als Einsetzdeckel mit Deckelkragen (12) und Deckelflansch (13) ausgeführt ist, welcher Deckelflansch (13) auf einem Auflagebund (14) am Kraftstoffiltergehäuse (6) aufgelegt ist, wobei der Abstandsspalt (9) zwischen dem Deckelkragen (12) und dem gegenüberliegenden Kraftstoffiltergehäuse (6) sowie zwischen Deckelflansch (13) und Auflagebund (14) ausgebildet ist und wobei dieser Abstandsspalt (9) über zumindest eine Bohrung (10) mit dem Kraftstoffsystem oder dem Luftsystem verbunden ist.

3. Einrichtung nach einem der Ansprüche 1 oder 2, dadurch gekennzeichnet, daß der Deckel (8) durch eine Überwurfringmutter (15) am Kraftstoffiltergehäuse (6) gehalten ist.

4. Einrichtung nach einem der Ansprüche 1 bis 3, dadurch gekennzeichnet, daß in dem Abstandsspalt (9) zusätzlich ein Dichtungsring (16) angeordnet ist, der in eine Dichtungsringaufnahme (17) am Deckel (8) eingelegt ist.

5. Einrichtung nach einem der Ansprüche 1 bis 4, dadurch gekennzeichnet, daß der Kraftstoffilter (1) in dem Kraftstofftank (2) des Kraftstoffsystems mit außenliegendem Deckel (8) angeordnet ist und der Abstandsspalt (9) mit dem Innenraum des Kraftstofftanks (2) leckagesichernd in Verbindung steht.

6. Einrichtung nach einem der Ansprüche 1 bis 4, dadurch gekennzeichnet, daß der Kraftstoffilter (1) in dem Aktivkohlefilter (18) einer zum Luftsystem gehörenden Tankentlüftung (19) mit außenliegendem Deckel (8) angeordnet ist und der Abstandsspalt (9) mit einem Sammelraum (20) für die Kraftstoffdämpfe leckagesichernd in Verbindung steht, von welchem Sammelraum (20) eine zum Kraftfahrzeugmotor führende Ansaugleitung (21) abgeht.

7. Einrichtung nach einem der Ansprüche 1 bis 4, dadurch gekennzeichnet, daß der Kraftstoffilter (1) in dem Verbrennungsluftfilter (4) des Luftsystems mit außenliegendem Deckel (8) angeordnet ist und der Abstandsspalt (9) mit einem Sammelraum (22) in Strömungsrichtung der Verbrennungsluft hinter dem Filterkörper (23) des Verbrennungsluftfilters (4) leckagesichernd in Verbindung steht.

8. Einrichtung nach einem der Ansprüche 1 bis 7, dadurch gekennzeichnet, daß der Kraftstoffilter (1) als Modulbauteil ausgeführt ist und ein aus thermoplastischem Kunststoff gespritztes Kraftstoffiltergehäuse (6) mit angespritztem Einbaubauteil (24) sowie einem aus thermoplastischem Kunststoff gespritzten Deckel (8) aufweist.

9. Einrichtung nach einem der Ansprüche 1 bis 8, dadurch gekennzeichnet, daß die Kombination der folgenden Merkmale verwirklicht ist:
a) der Kraftstoffilter (1) weist ein Kunststoffiltergehäuse (6) mit reduzierter Sperrwirkung und/oder reduzierter Lecksicherheit auf,
b) der Kraftstoffilter genügt erst durch den Einbau in das zum Kraftstoffsystem und/oder Luftsystem gehörende Bauteil den Anforderungen an die Leckagesicherheit.

## Claims

1. A device for the fuel supply of a motor vehicle engine, having
a fuel filter (1) which comprises a fuel filter housing (6) made of synthetic material and at least one filter cartridge (7) replaceably disposed therein and an external cover (8) which is removable in order to replace the filter cartridge (7),
a fuel system with a fuel pump (11), a fuel tank (2) and fuel lines (3) for the supply of fuel to the internal combustion engine of the motor vehicle, and
an air system with a combustion air filter (4) and combustion air lines (5) for the supply of combustion air to the internal combustion engine of the motor vehicle,
wherein the fuel flows through the fuel filter housing (6) and through the filter cartridge (7), and the fuel filter housing (6) is under an overpressure when the fuel pump (11) is switched on, and wherein the fuel filter (1) is accommodated in a component forming part of the fuel system or of the air system for the purpose of capturing fuel emerging in an uncontrolled manner, characterised in that the combination of the following features is put into effect:
a) a spacer gap (9) which comprises a leak protection means is situated between the cover (8) and the fuel filter housing (6),
b) the leak protection means is put into effect in that the spacer gap (9) communicates, protecting from leaks, with the fuel system or with the air system.

2. A device according to claim 1, characterised in that the cover (8) of the fuel filter housing (6) is designed as an insertion cover having a cover skirt (12) and a cover flange (13), which cover flange (13) is placed on a supporting shoulder (14) on the fuel filter housing (6), wherein the spacer gap (9) is formed between the cover skirt (12) and the opposing fuel filter housing (6) and between the cover flange (13) and the supporting shoulder (14), and wherein the said spacer gap (9) is connected to the fuel system or to the air system via at least one bore (10).

3. A device according to either one of claims 1 or 2, characterised in that the cover (8) is held on the fuel filter housing (6) by a union ring nut (15).

4. A device according to any one of claims 1 to 3, characterised in that a sealing ring (16), which is inserted in a sealing ring seating (17) on the cover (8), is additionally disposed in the spacer gap (9).

5. A device according to any one of claims 1 to 4, characterised in that the fuel filter (1) is disposed in the fuel tank (2) of the fuel system with an external cover (8), and the spacer gap (9) communicates, protecting from leaks, with the interior space of the fuel tank (2).

6. A device according to any one of claims 1 to 4, characterised in that the fuel filter (1) is disposed in the activated carbon filter (18) of a tank ventilation means (19) forming part of the air system, with an external cover (8), and the spacer gap (9) communicates, protecting from leaks, with a collecting space (20) for the fuel vapours, from which collecting space (20) an intake line (21) leading to the motor vehicle engine leads off.

7. A device according to any one of claims 1 to 4, characterised in that the fuel filter (1) is disposed in the combustion air filter (4) of the air system with an external cover (8), and the spacer gap (9) communicates, protecting from leaks, with a collecting space (22) which is behind the filter body (23) of the combustion air filter (4) in the direction of flow of the combustion air.

8. A device according to any one of claims 1 to 7, characterised in that the fuel filter (1) is designed as a modular component and comprises a fuel filter housing (6) which is injection-moulded from synthetic thermoplastic material and has a moulded-on installation component (24), and comprises a cover (8) which is injection-moulded from synthetic thermoplastic material.

9. A device according to any one of claims 1 to 8, characterised in that the combination of the following features is put into effect:
a) the fuel filter (1) has a fuel filter housing (6) of synthetic material with a reduced barrier effect and/or reduced protection from leaks,
b) the fuel filter only satisfies the leak protection requirements due to its installation in the component forming part of the fuel system and/or air system.

## Revendications

1. Dispositif pour l'alimentation en carburant d'un moteur de véhicule automobile, comprenant un filtre à carburant (1) muni d'un boîtier de filtre à carburant (6) en matière plastique et d'au moins une cartouche de filtre (7) interchangeable ainsi que d'un couvercle extérieur (8) amovible pour le remplacement de la cartouche de filtre (7), un système de carburant avec pompe de carburant (11), réservoir de carburant (2) et conduites de carburant (3) pour l'amenée du carburant au moteur à combustion interne du véhicule automobile, et un système d'air avec filtre à air de combustion (4) et conduites d'air de combustion (5) pour l'amenée de l'air de combustion au moteur à combustion interne du véhicule automobile, le boîtier de filtre à carburant (6) ainsi que la cartouche de filtre (7) étant parcourus par le carburant, le boîtier de filtre à carburant (6) étant mis en dépression lorsque la pompe de carburant (11) est branchée, et le filtre à carburant (1) étant logé dans un élément de structure appartenant au système de carburant ou au système d'air pour recueillir le carburant sortant de manière incontrôlée, **caractérisé en ce** qu'il réalise la combinaison des particularités suivantes :
a) entre le couvercle (8) et le boîtier de filtre à carburant (6) se trouve une fente d'écartement (9) munie d'un dispositif anti-fuites,
b) le dispositif anti-fuites est réalisé par le fait que la fente d'écartement (9) communique avec le système de carburant ou le système d'air de façon à empêcher des fuites.

2. Dispositif selon la revendication 1, caractérisé en ce que le couvercle (8) du boîtier de filtre à carburant (6) est réalisé sous la forme d'un couvercle rapporté avec frette (12) et fausse-bride (13), ladite fausse-bride (13) étant disposée sur une collerette d'appui (14) sur le boîtier de filtre à carburant (6), la fente d'écartement (9) étant réalisée entre la frette (12) et le boîtier de filtre à carburant (6) opposé ainsi qu'entre la fausse-bride (13) et la collerette d'appui (14), et ladite fente d'écartement (9) communiquant par au moins un alésage (10) avec le système de carburant ou le système d'air.

3. Dispositif selon l'une des revendications 1 ou 2, caractérisé en ce que le couvercle (8) est maintenu sur le carter de filtre à carburant (6) par un écrou-raccord (15).

4. Dispositif selon l'une des revendications 1 à 3, caractérisé en ce que dans la fente d'écartement (9) est disposé, en supplément, un joint d'étanchéité (16) qui est inséré dans un logement de joint d'étanchéité (17) sur le couvercle (8).

5. Dispositif selon l'une des revendications 1 à 4, caractérisé en ce que le filtre à carburant (1) est disposé dans le réservoir de carburant (2) du système de carburant, avec couvercle (8) situé à l'extérieur, et que la fente d'écartement (9) communique avec l'intérieur du réservoir de carburant (2) de manière à empêcher des fuites.

6. Dispositif selon l'une des revendications 1 à 4, caractérisé en ce que le filtre à carburant (1) est disposé dans le filtre à charbon actif (18) d'un conduit de dégazage du réservoir (19) avec couvercle (8) situé à l'extérieur qui fait partie du système d'air, et que la fente d'écartement (9) communique de manière à empêcher des fuites avec un collecteur (20) pour les vapeurs de carburant, une conduite d'aspiration (21) partant dudit collecteur (20) et menant au moteur du véhicule automobile.

7. Dispositif selon l'une des revendications 1 à 4, caractérisé en ce que le filtre à carburant (1) est disposé dans le filtre à air de combustion (4) du système d'air avec couvercle (8) situé à l'extérieur, et que la fente d'écartement (9) communique de manière à empêcher des fuites avec un collecteur (22), dans la direction d'écoulement de l'air de combustion, derrière le corps du filtre (23) du filtre à air de combustion (4).

8. Dispositif selon l'une des revendications 1 à 7, caractérisé en ce que le filtre à carburant (1) est réalisé sous la forme d'un élément modulaire et comprend un boîtier de filtre à carburant (6) en matière thermoplastique moulé par injection, avec un élément encastré (24) formé par injection ainsi qu'un couvercle (8) en matière thermoplastique moulé par injection.

9. Dispositif selon l'une des revendications 1 à 8, caractérisé en ce qu'il réalise la combinaison des particularités suivantes :
a) le filtre à carburant (1) comprend un boîtier de filtre à carburant (6) avec un effet barrière réduit et/ou une protection anti-fuites réduite,
b) le filtre à carburant ne satisfait aux exigences à l'égard de la protection anti-fuites que par l'installation dans l'élément de structure faisant partie du système de carburant et/ou du système d'air.
